# EUROPEAN PATENT APPLICATION

(11) **EP 4 664 751 A1**
(43) Date of publication of application: **17.12.2025**
(21) Application number: 25182005.6
(22) Date of filing: 11.06.2025
(51) Int. Cl.: H02S 30/10, H02S 40/00

(54) **PROTECTION DEVICE FOR SOLAR PANELS**

(30) Priority: 11.06.2024 IT 202400013393
(71) Applicant: Italimpianti S.r.l., 20121 Milano (IT)
(72) Inventor: Danti, Gianfranco, 20121 Milano (IT)
(74) Representative: Fisauli, Beatrice A. M.

(57) **Abstract**

Protection device for solar panels, suitable for being arranged on top of a solar panel so as to act as a protection, comprising a frame to which a wire is tied so as to create a protection grid.

## Description

The present invention generally relates to a protection device suitable for protecting solar panels from atmospheric agents and other potential hazards. In particular, it concerns a protection device that can be mounted on a solar panel, either photovoltaic or thermal, so as to protect it from atmospheric agents, hail in particular, or from other potential hazards.

As is known, photovoltaic panels represent one of the most promising solutions for the production of clean energy, but they have some criticalities related to atmospheric agents. Hail, for example, may cause significant damage to the surface of the panels, compromising the efficiency of the system. Even though modern panels are designed to withstand moderate impacts, extreme weather events can still damage them.

A further issue is represented by the falling of objects onto the panels, especially when they are installed near trees or construction sites. Tree branches, leaves, fruits or debris from worksites can fall on the panels, physically damaging or covering them, thus reducing their efficiency.

In order to solve these problems, anti-hail barriers have been introduced by arranging nets above the solar panels. However, these nets tend to significantly reduce the output of the solar panels, as they also act as a sort of filter.

Another method of protecting solar panels is the use of protective glass with considerable thickness. However, this solution is very costly and increases the weight of the solar panel itself. Furthermore, for already installed solar panels, glass with suitable dimensions must be produced, with consequent manufacturing and mounting issues.

The object and function of the present invention is to provide a protection device for solar panels that overcomes the drawbacks of the known prior art devices.

Another object of the invention is to provide a protection device for solar panels that does not significantly increase the weight of the panels.

A further object of the invention is to provide a protection device for solar panels that does not involve significant costs.

Another object of the invention is to provide a protection device for solar panels that can be easily adopted both for newly manufactured solar panels and for already installed solar panels.

These and other objects are achieved by a protection device for solar panels according to the appended claims.

Additional features and details of the invention will be better understood from the following description, provided by way of non-limiting example, as well as from the attached drawing sheets in which:
Figure 1 is a front axonometric view of a protection device for solar panels according to the invention, also including the protection wire;

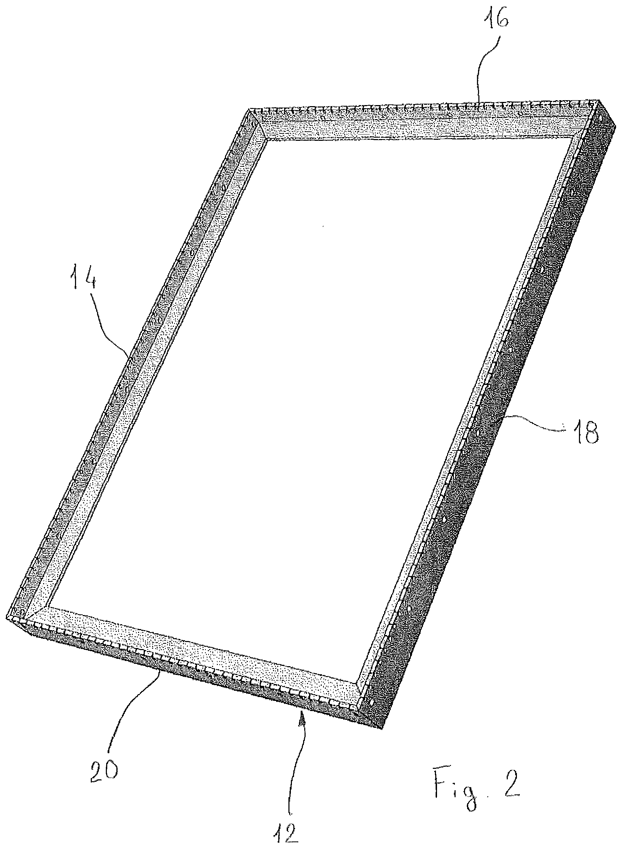

Figure 2 is a front axonometric view of the protection device of Figure 1, without the protection wire;
Figure 3 is a side axonometric view of a profile forming part of the protection device of Figure 1;
Figure 4 is a sectional side axonometric view of the protection device of Figure 1;
Figure 5 is a side axonometric view of a fastening element used to fix the protection device of Figure 1 to the respective solar panel.

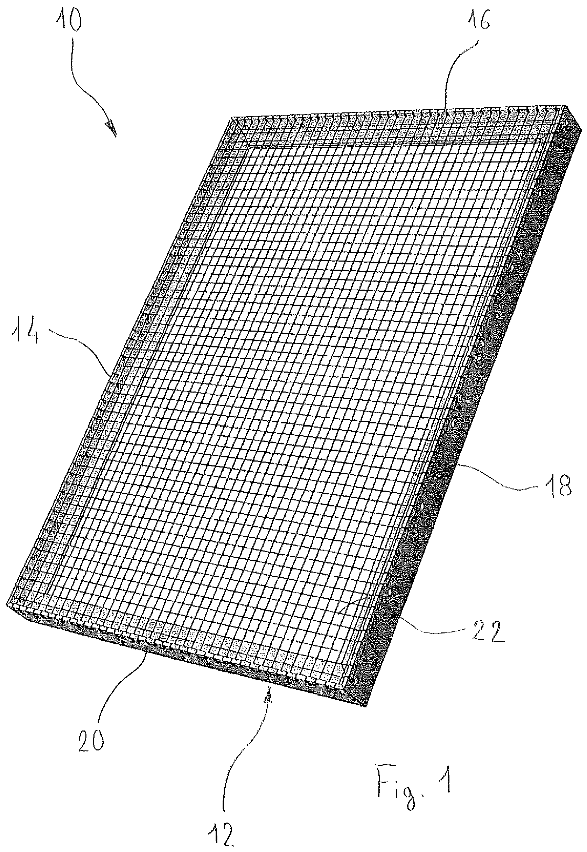

With reference to the attached figures, in particular to Figure 1, the numeral 10 generally denotes a protection device for solar panels, whether thermal or photovoltaic solar panels.

The protection device 10 comprises a wire 22 and a rectangular frame 12, the latter comprising:
- a first long profile 14;
- a first short profile 16;
- a second long profile 18;
- a second short profile 20.

The end edges of the four profiles 14, 16, 18, 20 are cut at 45° so that they can be attached to each other in a regular and continuous manner.

The nylon wire 22 is tied to the frame 12. In particular, the wire 22 is a single wire for the entire frame 12, without discontinuity.

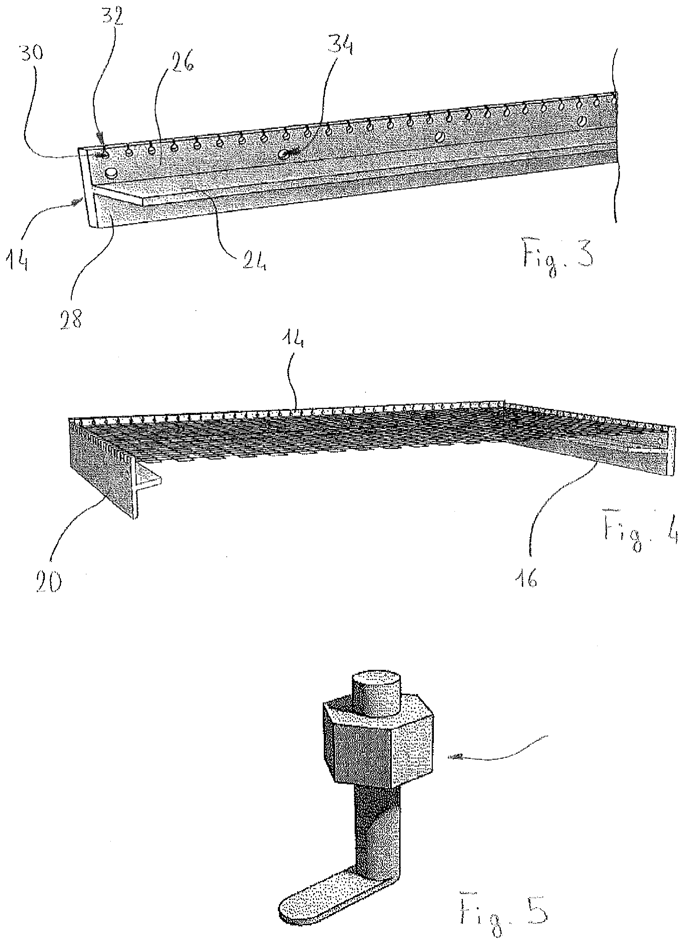

The profiles 14, 16, 18, 20 have a T-section, as shown in Figures 3 and 4.

In particular, as shown in Figure 3, each profile 14 comprises a lamella from which a longitudinal body 24 protrudes, dividing the same lamella into an upper portion 26 and a lower portion 28.

In the upper portion 26 of the lamella of each profile 14, 16, 18, 20, first holes 30 are formed, equidistant from each other and opened upwards through respective slots 32.

In the same upper portion 26, second holes 34 are also formed, which are equidistant from each other and have a larger diameter than the first holes 30. In particular, the first long profile 14 and the second long profile 18 comprise eight second holes 34 each, while the first short profile 16 and the second short profile 20 comprise six second holes 34 each.

The nylon wire 22 is manually arranged on the frame 12 to create a regular and uniform grid, as shown in Figure 1.

In particular, the wire 22 is passed through a slot 32 so as to rest in a first hole 30 of one of the profiles 14, 16, 18, 20, and then inserted in a similar manner into a first hole of the opposite profile, and subsequently moved externally to the adjacent first hole.

This arrangement starts from the first holes 30 located at one end of two parallel profiles and continues to the opposite ends of the same two profiles. Subsequently, the wire is similarly arranged in the first holes of the other two profiles of the frame 12, orthogonal to the first two already covered profiles. Once the nylon wire 22 grid has been completed, it is stably fixed so that it does not come loose and remains properly tensioned.

The frame 12 together with the wire 22 can be fixed to the respective solar panel by means of fastening elements such as those illustrated in Figure 5. These fastening elements are inserted through some of the second holes 34, selected based on the dimensions of the panels and, consequently, of the protection devices 10.

The protection device 10 protects the solar panel to which it is attached thanks to the nylon wire 22, which, due to its elastic properties, causes hail or other impacting bodies to bounce off, thus preventing the panel from being hit. Variants are possible and shall be deemed included within the scope of protection. For example, the number of first holes and second holes for each profile may vary from what has been described above.

The shape of the frame may also vary depending on the solar panels to which the protection device is to be coupled.

## Claims

1. Protection device (10) for solar panels, suitable for being arranged on top of a solar panel so as to act as a protection, **characterised by** comprising a frame (12) and a wire (22) which is tied to the frame (12) so as to create a protection grid.

2. Protection device (10) according to any preceding claim, wherein the wire (22) is a single wire for the entire frame (12).

3. Protection device (10) according to any one of the preceding claims, wherein the wire (22) is a single wire, i.e., without discontinuity.

4. Protection device (10) according to any one of the preceding claims, wherein the frame (12) comprises four profiles (14, 16, 18, 20) arranged orthogonally to each other.

5. Protection device (10) according to any one of the preceding claims, wherein the frame (12) comprises:
- a first long profile (14);
- a first short profile (16);
- a second long profile (18);
- a second short profile (20).

6. Protection device (10) according to claim 4 or 5, wherein the end edges of the four profiles (14, 16, 18, 20) are cut at 45° so that they can be attached to each other in a regular and continuous manner.

7. Protection device (10) according to any one of claims 4 to 6, wherein the profiles (14, 16, 18, 20) have a T-section.

8. Protection device (10) according to any one of the preceding claims, wherein each profile (14, 16, 18, 20) comprises a lamella from which a longitudinal body (24) protrudes and which divides the same lamella into an upper portion (26) and a lower portion (28), first holes (30) equidistant from each other being obtained in the upper portion (26) of the lamella of each profile (14, 16, 18, 20).

9. Protection device (10) according to any preceding claim, wherein the first holes (30) are opened upwards through a respective slot (32).

10. Protection device (10) according to claim 8 or 9, wherein second holes (34) having a larger diameter than the first holes (32) are provided in each profile (14, 16, 18, 20).
